# EUROPEAN PATENT APPLICATION

(11) **EP 2 065 802 A2**
(43) Date of publication of application: **03.06.2009**
(21) Application number: 08020658.4
(22) Date of filing: 27.11.2008
(51) Int. Cl.: G06F 9/46

(54) **System and method of accessing a device**

(30) Priority: 30.11.2007 US 948962
(71) Applicant: Infineon Technologies AG, 85579 Neubiberg (DE)
(72) Inventor: Cizas, Jurijus, Castro Valley, CA 94552 (US); Stafford, Mark, San Carlos, CA 94070 (US)
(74) Representative: Schoppe, Fritz

(57) **Abstract**

A method of accessing a device is provided. A command is received from an agent, over a network, for executing at least one instruction for accessing the device. Information is sent to the agent, over the network, regarding the execution of the at least one instruction.

## Description

### Cross-Reference to Related Application

This Utility Patent Application is related to U.S. Patent Application Serial Number ##/###,###, having Attorney Docket Number 2006P51008US/I550.109.101, entitled "SYSTEM AND METHOD OF CONTROLLING ACCESS TO A DEVICE," filed November 30, 2007, which is incorporated herein by reference.

### Background

A processor-based system, such as a computer, may include a number of electrical connectors for connecting other devices (hereinafter "peripheral devices") to the processor-based system. Exemplary peripheral devices include input devices, such as mice, keyboards, scanners, microphones, cameras, and output devices, such as monitors, printers and speakers. One exemplary peripheral device is another processor-based system.

The peripheral devices and the processor-based system communicate via an interface standard. The interface standard provides rules and/or guidelines by which information is transmitted between the processor-based system and the peripheral devices. Exemplary interface standards include Universal Serial Bus (USB), FireWire and RS-232. Each electrical connector in a processor-based system is typically associated with an interface standard.

Due to any number of reasons, such as physical space limitations, the processor-based system may have a limited number of electrical connectors. Although a number of hubs and adaptors may be available to expand the number of electrical connectors, each connection typically provides a limited throughput and bandwidth. Therefore, adding additional connections may slow down the corresponding peripheral devices if, for example, the peripheral devices are operating in parallel.

For these and other reasons, there is a need for the present invention.

### Summary

One embodiment provides a method of accessing a device. A command is received from an agent, over a network, for executing at least one instruction for accessing the device. Information is sent to the agent, over the network, regarding the execution of the at least one instruction.

### Brief Description of the Drawings

The accompanying drawings are included to provide a further understanding of embodiments of the invention and are incorporated in and constitute a part of this specification. The elements of the drawings are not necessarily to scale relative to each other. Like reference numerals designate corresponding similar parts.
Figure 1 is a block diagram illustrating one embodiment of an access system.
Figure 2 is a block diagram illustrating one embodiment of a first system.
Figure 3 is a block diagram illustrating one embodiment of a second system.
Figure 4 is a flow diagram illustrating one embodiment of a method of accessing a device.

### Detailed Description

In the following Detailed Description, reference is made to the accompanying drawings which illustrate embodiments in which the invention may be practiced. It is to be understood that other embodiments may be utilized and structural or logical changes may be made without departing from the scope of the invention. The following detailed description is not to be taken in a limiting sense, and the scope of the invention is defined by the appended claims.

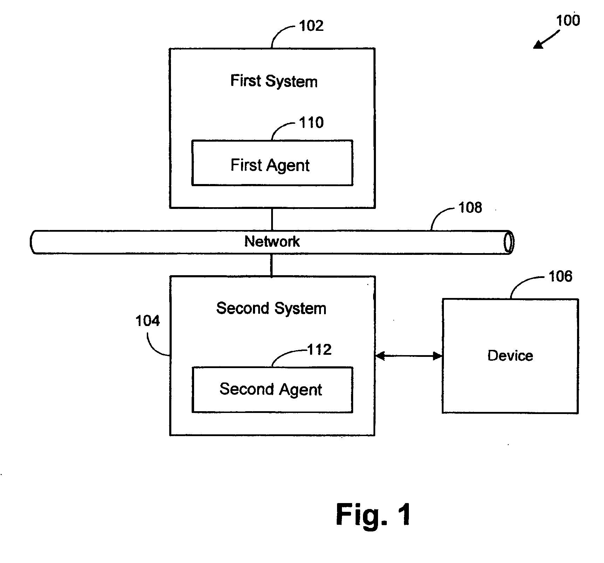

Figure 1 is a block diagram illustrating one embodiment of an access system 100. Access system 100 includes a first system 102, a second system 104 and a device 106. In other embodiments, access system 100 includes a plurality of second systems 104. In one embodiment, one or more of the second systems 104 include one or more processor-based systems operatively coupled to one or more device reader/writers. In one embodiment, one or more of the second systems 104 are personal computers that include processor-based systems. In the illustrated embodiment, first system 102 communicates with one or more second systems 104 via a network 108. In one embodiment, network 108 is a local area network (LAN). In various embodiments, the LAN technology used is Ethernet (e.g. as specified in IEEE 802.3), Token Ring network (e.g. as specified in IEEE 802.5) or Fiber Distributed Data Interface (FDDI). In other embodiments, other suitable LAN technology can be used.

In the illustrated embodiment, first system 102 and second system 104 communicate using TCP/IP (Transmission Control Protocol/Internet Protocol). In one embodiment, first system 102 and second system 104 use TCP/IP to communicate over the Internet. In one embodiment, network 108 is a private network such as an intranet or an extranet. In one embodiment, first system 102 and second system 104 use TCP/IP to communicate over the private network. In other embodiments, first system 102 and second system 104 communicate via network 108 using any suitable communications protocol.

In the illustrated embodiment, device 106 is a secure chip-based device. Exemplary secure chip-based devices include, but are not limited to, smart cards and electronic passports. In other embodiments, device 106 comprises any suitable device capable of being accessed by second system 104. In one embodiment, device 106 includes a security contactless microcontroller. In one embodiment, the microcontroller is connected to an antenna.

In the illustrated embodiment, second system 104 is capable of reading data from and/or writing data to device 106. Second system 104 communicates with device 106 via any suitable wired, wireless, contact or contactless interface. In one embodiment, second system 104 is capable of reading a unique identification (ID) from device 106.

In the illustrated embodiment, first system 102 includes a first agent 110. First agent 110 independently controls or manages the operation of one or more second systems 104 with respect to one or more devices 106. First agent 110 comprises one or more instructions, commands, scripts, or one or more software programs that can be executed by first system 102. In other embodiments, first system 102 includes two or more first agents 110. In the illustrated embodiment, the control is managed in accordance with the one or more instructions, commands or scripts. In one embodiment, the control is managed in accordance with one or more rules. In the illustrated embodiment, first agent 110 can initiate, monitor or terminate the instructions, scripts or sets of commands that are running on the one or more second systems 104. First agent 110 can receive and process any results that are received as a result of the instructions, scripts or sets of commands running on the one or more second systems 104. First agent 110 can update any database or memory based on the received and/or processed results.

In the illustrated embodiment, second system 104 includes one or more second agents 112. Each one of the one or more second agents 112 comprises one or more instructions, commands, scripts, or one or more software programs to be executed by second system 104 with respect to the one or more devices 106. First system 102 and/or first agent 110 can control or manage the operation of second system 104 by controlling and managing the execution of the one or more second agents 112. First system 102 and/or first agent 110 can transfer instructions, commands or scripts to the one or more second agents 112. First system 102 and/or first agent 110 can transfer one or more rules to the one or more second agents 112 that control or manage the execution of the one or more instructions, commands or scripts. First system 102 and/or first agent 110 can send commands to the one or more second agents 112 that initiate the execution of the instructions, commands or scripts. In one embodiment, first agent 110 instructs second system 104 to begin executing one or more of the second agents 112. In various embodiments, second system 104 can collect one or more results obtained from, or as a result of, the execution of the one or more second agents 112, and/or can send the one or more results to first agent 110. In one embodiment, the execution of the instructions, commands or scripts is performed in accordance with the rules. In various embodiments, the execution of the instructions, commands or scripts can be used to transfer information to and from one or more of the devices 106, to verify the functionality of one or more of the devices 106, or to perform other suitable functions or tasks. In other embodiments, second system 104 is capable of independently executing the instructions, commands or scripts, of setting rules that govern the execution of the instructions, commands or scripts, or of modifying the rules that govern the execution of the instructions, commands or scripts.

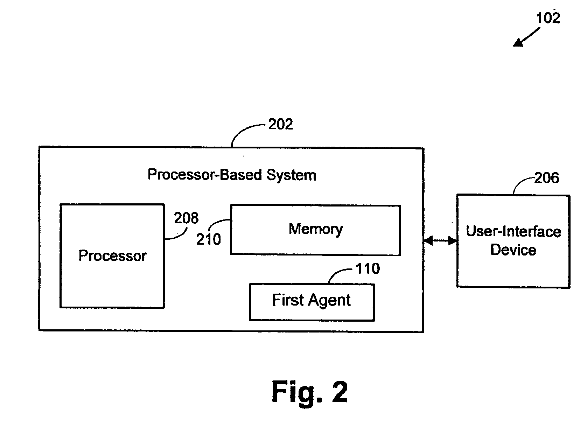

Figure 2 is a block diagram illustrating one embodiment of a first system 102. In this embodiment, first system 102 comprises a processor-based system 202. In one embodiment, processor-based system 202 can communicate with a user-interface 206. In one embodiment, processor-based system 202 communicates with user-interface 206 via network 108. In the illustrated embodiment, processor-based system 202 includes first agent 110, processor 208 and memory 210. In one embodiment, processor-based system 202 is a server. In the illustrated embodiment, processor 208 can communicate with first agent 110 and/or memory 210. Memory 210 can include any suitable type of memory that can store information such as a random access memory (RAM). In another embodiment, memory 210 is located externally with respect to processor-based system 202.

In the illustrated embodiment, first agent 110 comprises one or more instructions, commands, scripts, or one or more software programs which control or manage the execution of the one or more second agents 112. In one embodiment, first agent 110 comprises an intelligent software agent which can adapt and/or learn while controlling and managing the execution of one or more of the second agents 112. In one embodiment, first agent 110 comprises an autonomous software agent which can make decisions and take actions based on communication with one or more of the second agents 112. In other embodiments, first agent 110 comprises any suitable form of hardware, firmware, and/or software. In one embodiment, first agent 110 comprises one or more instructions, commands or scripts that are stored in memory 210 and executed by processor 208. In one embodiment, first agent 110 comprises an embedded device that contains executable instructions.

In the illustrated embodiment, user interface 206 provides one or more tools for a user to communicate with processor-based system 202. In one embodiment, user interface 206 includes one or more input/output (I/O) devices, such as a keyboard, a mouse, a computer monitor, and the like. In another embodiment, user-interface 206 includes another processor-based system (not shown) for communicating with processor-based system 202 via network 108. In one embodiment, user interface 206 communicates with processor-based system 202 via a graphical-user interface (GUI).

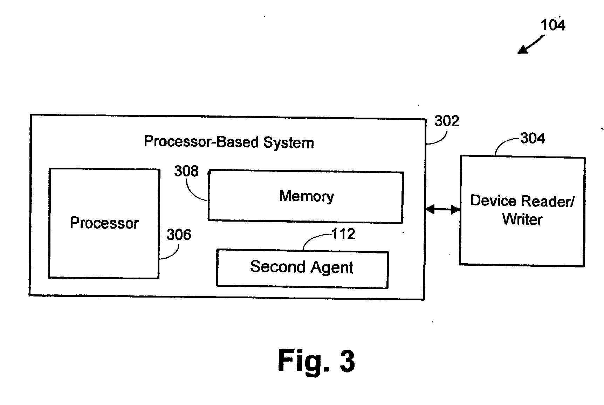

Figure 3 is a block diagram illustrating one embodiment of a second system 104. In this embodiment, second system 104 comprises a processor-based system 302 and one or more device reader/writers 304. In various embodiments, device reader/writers 304 comprise any suitable coupling device. In one embodiment, processor-based system 302 is encompassed within device reader/writer 304. Processor-based system 302 communicates with device reader/writer 304. In one embodiment, device reader/writer 304 is connected to processor-based system 302 via a USB. In one embodiment, device reader/writer 304 is connected to processor-based system 302 via network 108. In other embodiments, device reader/writer 304 is connected to processor-based system 302 via any suitable wired or wireless interface.

In the illustrated embodiment, device reader/writer 304 communicates with device 106 via a contactless interface, such as a Radio Frequency Identification (RFID) interface. In other embodiments, device reader/writer 304 communicates with device 106 via any suitable wired, wireless, contact, or contactless interface.

In the illustrated embodiment, processor-based system 302 includes one or more second agents 112, processor 306 and memory 308. In various embodiments, processor-based system 302 comprises a computer or microcontroller. In various embodiments, the computer can be a personal computer or a workstation. In the illustrated embodiment, the one or more second agents 112 comprise one or more instructions, commands, scripts, or one or more software programs that enable the access or control of the one or more devices 106. In one embodiment, the one or more instructions, commands, scripts, or one or more software programs are stored in memory 308. In one embodiment, the one or more instructions, commands, scripts, or one or more software programs are executed by processor 306. In one embodiment, one or more of the second agents 112 comprise intelligent software agents which can adapt and/or learn while controlling one or more of the devices 106. In one embodiment, one or more of the second agents 112 comprise autonomous software agents which can make decisions and take actions based on communications with one or more of the devices 106. In other embodiments, one or more of the second agents 112 comprise any suitable form of hardware, firmware, and/or software. In one embodiment, one or more of the second agents 112 comprise one or more instructions, commands or scripts that are stored in memory 308 and executed by processor 306. In one embodiment, one or more of the second agents 112 comprise an embedded device that contains executable instructions. In one embodiment, one or more of the second agents 112 are executed via a device driver (not shown) on processor-based system 302 and an application programming interface (API) (not shown) on device reader/writer 304.

In various embodiments, each of the one or more second agents 112 can utilize the one or more APIs for the one or more device reader/writers 304 to execute one or more instructions, commands, scripts, or one or more software programs. The one or more instructions, commands, scripts, or one or more software programs can be used to test, verify or personalize the one or more devices 106. In one embodiment, each second agent 112 runs as a separate process and communicates with one or more devices 106 via a single device reader/writer 304 to avoid potential thread-safety issues. In another embodiment, each second agent 112 runs as a thread in a process and communicates with a single device 106 via a single device reader/writer 304.

In the illustrated embodiment, first agent 110 instructs one or more of the second systems 104 to begin executing one or more of the second agents 112. Each second system 104 can collect any results obtained from the execution of the second agents 112 and send the results to first agent 110. In one embodiment, each second agent 112 tests and verifies one or more devices 106 via one or more device reader/writers 304. In one embodiment, each second agent 112 initializes one or more devices 106 via one or more device reader/writers 304. In various embodiments, one or more of the second agents 112 can access one or more of the devices 106 and perform functions or tasks that include, but are not limited to, programming, personalizing, initializing or verifying the one or more of the devices 106.

In the illustrated embodiment, device 106 comprises a controller that is coupled to an antenna. In one embodiment, the controller is a 16 bit controller that provides a secure interface to device reader/writer 304. In one embodiment, device 106 receives energy from device reader/writer 304 when in close proximity to device reader/writer 304, and uses this energy to power the controller and communicate with device reader/writer 304 via a wireless radio frequency (RF) interface. In one embodiment, device 106 is an electronic passport, and the controller is embedded in a cover or in a single page of the passport.

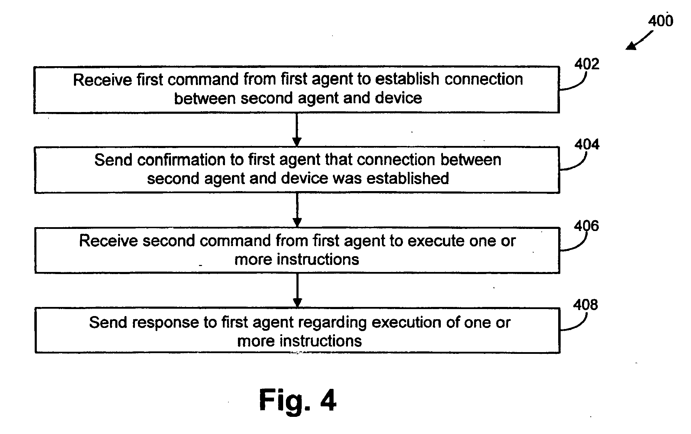

Figure 4 is a flow diagram illustrating one embodiment of a method 400 of accessing a device. First agent 110 sends a first command (at 402) to second agent 112 to establish a connection between second agent 112 and device 106. In one embodiment, first agent 110 sends a first command to one or more second agents 112 to establish a connection between the one or more second agents 112 and two or more devices 106. In various embodiments, each second agent 112 can establish a connection with a unique device 106 or with two or more devices 106. In one embodiment, first agent 110 sends a first command to second agent 112 to establish a connection between second agent 112 and device reader/writer 304. In one embodiment, first agent 110 sends a first command to one or more second agents 112 to establish a connection between the one or more second agents 112 and two or more device reader/writers 304. In various embodiments, each second agent 112 can establish a connection with a single device reader/writer 304 or with two or more device reader/writers 304.

Second agent 112 sends a confirmation to first agent 110 (at 404) that a connection between second agent 112 and device 106 has been established. In one embodiment, second agent 112 sends one or more confirmations to first agent 110 that a connection between second agent 112 and two or more devices 106 has been established. In one embodiment, second agent 112 sends a confirmation to first agent 110 that a connection between second agent 112 and device reader/writer 304 has been established. In one embodiment, second agent 112 sends one or more confirmations to first agent 110 that a connection between second agent 112 and two or more device reader/writers 304 has been established. In various embodiments, the confirmation comprises a status of one or more of the devices 106 and/or one or more of the device reader/writers 304.

In the illustrated embodiment, if the connection is not made, second agent 112 and will attempt again after a suitable period of time to establish a connection with one or more of the devices 106 or with one or more of the device reader/writers 304. The attempt to establish the connection with one or more of the devices 106 or with one or more of the device reader/writers 304 will be repeated a finite number of times. In different embodiments, the number of times the attempt to establish the connection is made can be different for each one of the devices 106, or for each one of the device reader/writers 304. The number of times can be any suitable number. For each device 106 or device reader/writer 304, if the connection is not established after the corresponding number of times, a message comprising information that indicates that the connection was not established will be sent by second agent 112 to first agent 110. In another embodiment, the message may comprise a status of the device 106 or of the device reader/writer 304.

First agent 110 sends a second command (at 406) to second agent 112 to execute one or more instructions, commands, scripts, or one or more software programs. In one embodiment, two or more second agents 112 receive instructions from first agent 110 to execute one or more instructions, commands, scripts, or one or more software programs. In various embodiments, the execution of the one or more instructions, commands, scripts, or one or more software programs can be used to enable access or control of one or more of the devices 106, to transfer information to or from one or more of the devices 106, to verify the functionality of one or more of the devices 106, or to perform other suitable functions or tasks.

Second agent 112 sends a response to first agent 110 (at 408) regarding the execution of the one or more instructions, commands, scripts, or one or more software programs. Each one of the one or more second agents 112 will continue the execution of the one or more instructions, commands, scripts, or one or more software programs until the execution is finished. Once the execution is finished, the respective second agent 112 will send a response to first agent 110. In various embodiments, the response can include status, results such as test results, or can include other information related directly or indirectly to the execution of the one or more instructions, commands, scripts, or one or more software programs.

In the illustrated embodiment, each of the one or more second agents 112 will attempt to execute the one or more instructions, commands, scripts, or one or more software programs a number of times. If any of the second agents 112 fails to execute the one or more instructions, commands, scripts, or one or more software programs after the number of attempts, the respective second agent 112 will send a response to first agent 110. The response indicates that the execution of the one or more instructions, commands, scripts, or one or more software programs failed. In various embodiments, the response may comprise a status of device 106 or of device reader/writer 304.

In other embodiments, each second agent 112 can execute one or more instructions, commands, scripts, or one or more software programs interactively with first agent 110. In one embodiment, second agent 112 can send interim results or status information back to first agent 110 after completing only a portion of the one or more instructions, commands, scripts, or one or more software programs. Depending on the results or status information, first agent 110 can send another command or additional instructions, commands, scripts or software programs to second agent 112 regarding the completion of the one or more instructions, commands, scripts, or one or more software programs.

In various embodiments, first agent 110 is configured to initiate a connection with one or more of the second agents 112. In one embodiment, first agent 110 sends a command to one or more of the second agents 112 to initiate a handshake protocol between first agent 110 and the one or more second agents 112. In one embodiment, one or more of the second agents 112 are in a disconnected state and are waiting to receive the command from first agent 112. In one embodiment, once any of the one or more second agents 112 are connected to and/or can communicate with first agent 110, the respective second agent 112 waits for the first command.

Embodiments described and illustrated above provide systems and methods of accessing a device. It is to be understood that not all components and/or steps described and illustrated with reference to the Figures are required for all embodiments. In one embodiment, one or more of the illustrative methods are implemented as an application comprising program instructions that are tangibly embodied on one or more program storage devices or machine readable storage media (e.g., hard disk, magnetic floppy disk, universal serial bus (USB) flash drive, random access memory (RAM), read-only (ROM), CDROM, etc.), and executable by any device or machine comprising suitable architecture, such as a general purpose digital computer having a processor, memory, and input/output interfaces.

Although specific embodiments have been illustrated and described herein, it will be appreciated by those of ordinary skill in the art that a variety of alternate and/or equivalent implementations may be substituted for the specific embodiments shown and described without departing from the scope of the invention. This application is intended to cover any adaptations or variations of the embodiments discussed herein. Therefore, it is intended that this invention be limited only by the claims and the equivalents thereof.

## Claims

1. A method of accessing a device, comprising:
receiving a command from a first agent, over a network, for executing at least one instruction for accessing the device; and
sending information to the first agent, over the network, regarding the execution of the at least one instruction.

2. The method of claim 1, wherein executing the at least one instruction for accessing the device comprises transferring information to the device.

3. The method of claim 2, wherein transferring information to the device comprises transferring information that is unique to the device.

4. The method of claim 1, wherein executing the at least one instruction for accessing the device comprises verifying the operation of the device.

5. The method of claim 1, wherein executing the at least one instruction for accessing the device comprises initiating a connection with the device;

6. The method of claim 1, wherein sending the information to the first agent, over the network, regarding the execution of the at least one instruction comprises:
if the execution of the at least one instruction is finished, then sending a confirmation, over the network, to the first agent; or
if the execution of the at least one instruction has failed, then sending an error message, over the network, to the first agent.

7. The method of claim 6, further comprising:
if the execution of the at least one instruction has failed, then receiving, over the network, after a period of time, the command from the first agent for
executing the at least one instruction for accessing the device.
